# EUROPÄISCHE PATENTSCHRIFT

(11) **EP 1 883 497 B1**
(45) Veröffentlichungstag und Bekanntmachung des Hinweises auf die Patenterteilung: **12.01.2011**
(21) Anmeldenummer: 06742690.8
(22) Anmeldetag: 25.04.2006
(51) Int. Cl.: B23Q 1/62, B23H 9/00, B24B 3/00

(54) **VORRICHTUNG ZUM BEARBEITEN VON MIT SCHNEIDZÄHNEN VERSEHENEN PLATTENFÖRMIGEN ODER ZYLINDRISCHEN WERKSTÜCKEN**
APPARATUS FOR MACHINING PLATE-SHAPED OR CYLINDRICAL WORKPIECES COMPRISING CUTTING TEETH
DISPOSITIF POUR USINER DES PIECES PLATES OU CYLINDRIQUES PRESENTANT DES DENTURES

(30) Priorität: 29.04.2005 DE 102005020035
(43) Veröffentlichungstag der Anmeldung: 06.02.2008
(73) Patentinhaber: VOLLMER WERKE Maschinenfabrik GmbH, 88400 Biberach/Riss (DE)
(72) Erfinder: BRAND, Stefan, 88487 Mietingen-Walpertshofen (DE); BAILER, Peter, 88433 Schemmerhofen-Altheim (DE); BAILER, Norbert, 88433 Schemmerhofen-Altheim (DE); VEIL, Siegfried, 88416 Ochsenhausen (DE)
(74) Vertreter: Thum, Bernhard
(86) Internationale Anmeldenummer: PCT/EP2006/003835
(87) Internationale Veröffentlichungsnummer: WO 2006/117104

(56) Entgegenhaltungen:
- EP-A- 0 941 790
- WO-A-03/074226
- DE-A1- 3 328 062
- DE-A1- 19 506 204
- DE-U1- 8 713 384
- US-A- 5 326 954

## Beschreibung

Die vorliegende Erfindung betrifft eine Vorrichtung zum Bearbeiten von mit Schneidzähnen versehenen plattenförmigen oder zylindrischen Werkstücken nach dem Oberbegriff von Patentanspruch 1.

Eine derartige Vorrichtung ist aus dem Dokument EP 0 941 790 A1 bekannt. Dieses beschreibt eine Maschine zur spanenden Bearbeitung von insbesondere stangenförmigen Werkstücken mit einem über eine Schlittenanordnung bewegbaren sowie verschwenkbaren Bearbeitungskopf und einer Werkzeugspanneinrichtung zur rotierbaren Aufnahme der Werkstücke. Diese Maschine soll in kompakter und kostengünstiger Ausführung erhältlich sein. Die Werkstücke werden auf einem linear verschiebbaren Spannschlitten aufgenommen und bearbeitet. Mit dieser Maschine lassen sich nur ganz bestimmte Bearbeitungsschritte durchführen. Sobald jedoch die Werkstücke in verschiedenen Winkellage relativ zur Werkstückachse bearbeitet werden sollen, gelangt diese Maschine an ihre Grenzen.

Bei der Vorrichtung gemäß dem Dokument WO 92/19410 ist eine Bearbeitungseinrichtung mit einer Drahtelektrode vorgesehen, die zum funkenerosiven Bearbeiten von Werkstücken eingesetzt werden kann. Die Werkstücke sind an einer Werkstückpositioniereinrichtung anbringbar, die eine Positionierung des Werkstücks durch Verlagerung und Verdrehung um verschiedene Achsen ermöglicht. Im Einzelnen lässt sich die Bearbeitungseinrichtung entlang zweier Raumachsen linear verlagern und um eine zu einer der Raumachsen parallele Schwenkachse verschwenken. Die Achsanordnung der Werkstückpositioniereinrichtung umfasst ebenfalls zwei lineare Raumachsen sowie die Möglichkeit der Verschwenkung des Werkstücks um alle drei Raumachsen. Hierzu weist die Werkstückpositioniereinrichtung eine verhältnismäßig großbauende komplizierte Achsanordnung auf, die letztendlich nur an einer bestimmten Winkelposition des Werkstücks bezüglich der Werkstückpositioniereinrichtung Zugang zum Werkstück bietet, nämlich an der sogenannten Zwölf-Uhr-Position, das heißt an dem in vertikaler Richtung jeweils höchstgelegenen radial äußeren Werkstückbereich. Dadurch sind einer Bearbeitung der Schneidzähne des Werkstücks erhebliche Grenzen gesetzt. So können bestimmte Bearbeitungsaufgaben nur mit großen Verfahrwegen und Schwenkbewegungen durchgeführt werden. Bearbeitungsaufgaben, die ein Kontaktieren des Werkstücks in der Drei-Uhr-Position oder Neun-Uhr-Position erfordern, das heißt an Schneidzähnen, die um etwa 90° zu dem in vertikaler Richtung höchstgelegenen radial äußeren Werkstückbereich versetzt sind, können nicht ausgeführt werden.

Aus dem Dokument DE 196 26 204 A1 ist eine Werkzeugschleifmaschine bekannt, bei der das Werkstück an einem anderen Ort an der Maschine angebracht wird, als dem Schleifort. Die Maschine ist mit zwei Aufnahmeeinheiten versehen, die sich zwischen dem Beladeort und dem Schleifort verlagern lassen. Die Maschine umfasst neben den verschwenkbaren Aufnahmeeinheiten einen Bearbeitungskopf, der sich entlang der Raumachsen linear verlagern und um die vertikale Raumachse verdrehen lässt. Auch mit dieser Schleifmaschine sind nur im begrenzten Umfang Bearbeitungsaufgaben an den Werkstücken zu lösen.

Schließlich zeigt das Dokument EP 1 052 056 eine Fünf-Achsen-CNC-Werkzeugschleifmaschine. Bei dieser Werkzeugschleifmaschine ist die Bearbeitungseinrichtung entlang der drei Raumachsen linear verlagerbar. Ferner ist ein Bearbeitungskopf um zwei zueinander parallele horizontale Achsen verschwenkbar, so dass sich eine Schleifscheibe in eine Vielzahl verschiedener Bearbeitungspositionen relativ zu einem Werkstück bringen lässt. Eine Positioniereinrichtung zum bedarfsweisen Positionieren des Werkstücks ist hingegen nicht vorgesehen. Sämtliche für eine Bearbeitung des Werkstücks erforderlichen Verstellbewegungen werden von der Bearbeitungseinrichtung vollzogen.

Es ist eine Aufgabe der vorliegenden Erfindung, eine Vorrichtung zum Bearbeiten von mit Schneidzähnen versehenen plattenförmigen oder zylindrischen Werkstücken bereitzustellen, die bei einfachem Aufbau und minimalen Verfahrwegen eine hohe Flexibilität bei der Durchführung verschiedener Bearbeitungsaufgaben bietet.

Diese Aufgabe wird durch eine Vorrichtung zum Bearbeiten von mit Schneidzähnen versehenen plattenförmigen oder zylindrischen Werkstücken mit den Merkmalen des Anspruchs 1 gelöst. Die erfindungsgemäße Vorrichtung ist ausgeführt mit einer blockartigen Maschinenbasis, einer relativ zu der Maschinenbasis verlagerbaren Bearbeitungseinrichtung und einer relativ zu der Maschinenbasis verlagerbaren Werkstückpositionierein-richtung, wobei die Bearbeitungseinrichtung eine relativ zur Maschinenbasis entlang einer ersten Raumachse linear verlagerbare Bearbeitungsbrücke und einen relativ zur Bearbeitungsbrücke entlang einer zweiten Raumachse linear verlagerbaren Bearbeitungsarm umfasst, wobei an dem Bearbeitungsarm eine Bearbeitungseinheit mit einem Bearbeitungswerkzeug um eine Schwenkachse schwenkbar gelagert ist, wobei die Schwenkachse im wesentlichen orthogonal zu einer von erster und zweiter Raumachse aufgespannten Ebene verläuft, wobei weiter die Werkstückpositioniereinrichtung einen relativ zu der Maschinenbasis entlang einer dritten Raumachse linear verlagerbaren Lagerschlitten aufweist und wobei an dem Lagerschlitten eine Kipplageranordnung vorgesehen ist, in der eine Werkstückaufnahmeanordung um eine Kippachse verkippbar gelagert ist, wobei die Kippachse im Wesentlichen orthogonal zu der dritten Raumachse verläuft, und wobei das Bearbeitungswerkzeug an der Bearbeitungseinheit um eine Antriebsachse drehantreibbar angebracht ist, die im Wesentlichen orthogonal zur Schwenkachse verläuft.

Bei der erfindungsgemäßen Vorrichtung sind die einzelnen Bearbeitungsachsen entlang denen oder um die zur Bearbeitung eines Werkstücks Bewegungen erforderlich sind, in besonders günstiger Weise zwischen der Bearbeitungseinrichtung und der Werkstückpositioniereinrichtung aufgeteilt, so dass die erfindungsgemäße Vorrichtung bei verhältnismäßig kompakter Bauform eine gute Zugänglichkeit für die Bearbeitungseinrichtung zu dem Werkstück bietet. Durch die erfindungsgemäße Aufteilung der einzelnen Linearverlagerungsachsen und Schwenkachsen auf Bearbeitungseinrichtung und Werkstückpositioniereinrichtung sind für die einzelnen Bearbeitungsaufgaben nur Verfahrwege und Schwenkbewegungen in geringem Ausmaß erforderlich, so dass ausladende Führungs- und Antriebskomponenten vermieden und dennoch sämtliche erforderlichen Bearbeitungsaufgaben durchgeführt werden können. Dadurch lässt sich eine gute Zugänglichkeit zu dem Werkstück erreichen, was insbesondere darin resultiert, dass das Werkstück nicht lediglich an einer Bearbeitungsposition, beispielsweise der Zwölf-Uhr-Position, das heißt dem vertikal am höchsten liegenden Bereich des Werkstücks, erfolgen kann, sondern in einem größeren Winkelbereich. Mit der Erfindung ist es ohne Weiteres möglich, an einem scheibenförmigen Werkstück Bearbeitungsaufgaben in einem Winkelbereich von 180° um die Zwölf-Uhr-Position durchzuführen, das heißt zwischen der Drei-Uhr-Position und der Neun-Uhr-Position. Durch die Achsanordnung lassen sich auch komplizierte Bearbeitungsvorgänge automatisiert durchführen, wie beispielsweise eine erosive Bearbeitung von abgeschrägten Flächen, die bei der Bearbeitung ein kontinuierliches Verkippen des Werkstücks erfordern.

Durch den Verlauf der Kippachse lässt sich das Werkstück in für die Bearbeitung vorteilhafter Art und Weise verkippen. Eine korrespondierende Verkippung der Bearbeitungseinheit kann somit unterbleiben, was den Aufbau der gesamten Maschine vereinfacht. Vorzugsweise ist ein Verkippwinkel von ± 30° bezüglich einer Nulllage des Werkstücks vorgesehen, in der dessen Längsachse im Wesentlichen waagerecht verläuft.

Zur entsprechenden Positionierung des Werkstücks kann ferner vorgesehen sein, dass die Werkstückaufnahmeanordnung eine um eine Werkstückdrehachse drehantreibbare Werkstückaufnahmespindel aufweist. Mit der drehantreibbaren Werkstückaufnahmespindel lässt sich das Werkstück um seine Werkstückdrehachse verdrehen und so die einzelnen zu bearbeitenden Schneidzähne in eine gewünschte Winkelposition bezüglich der Werkstückpositioniereinrichtung bringen. Dabei kann vorgesehen sein, dass die Werkstückdrehachse relativ zu der Kippachse im Wesentlichen orthogonal verläuft.

Eine Weiterbildung der Erfindung sieht vor, dass der Lagerschlitten mit einer Lagergabel ausgebildet ist und dass die Werkstückaufnahmeanordnung in der Lagergabel gelagert ist. Diese Ausbildung der Werkstückpositioniereinrichtung hat den Vorteil großer Maßgenauigkeit. Freitragende Anordnungen, wie sie beispielsweise aus dem eingangs diskutierten Stand der Technik gemäß WO 92/19410 bekannt sind, unterliegen hingegen oftmals dem Problem von Deformationen, beispielsweise bedingt durch die Werkstückmasse oder dergleichen, was letztendlich auch zu einer Beeinträchtigung des Bearbeitungsergebnisses führen kann.

Eine Weiterbildung der Erfindung sieht vor, dass die Vorrichtung mit einem Linearstellglied ausgeführt ist, insbesondere einem elektromechanischen Stellglied, das zum Verkippen der Werkstückaufnahmeeinrichtung zwischen dieser und dem Lagerschlitten angeordnet ist. Das Linearstellglied ist dabei sowohl an dem Lagerschlitten als auch an der Werkstückaufnahmeeinrichtung schwenkbar gelagert und sorgt für die vorstehend angesprochene Kippbewegung. Je nach Hub des Linearstellglieds lässt sich die Werkstückaufnahmeanordnung verkippen.

Vorzugsweise ist vorgesehen, dass das Bearbeitungswerkzeug eine Erodierelektrode ist. Es ist gleichsam aber auch möglich, dass das Bearbeitungswerkzeug eine Schleifscheibe, eine Drahtelektrode oder ein Laserwerkzeug ist.

Bei einer Weiterbildung der Erfindung ist vorgesehen, dass das Bearbeitungswerkzeug von einer Seite der Bearbeitungseinheit vorsteht und dass an der bezüglich der Schwenkachse entgegengesetzten Seite der Bearbeitungseinheit ein Messtaster vorgesehen ist. So lässt sich die Bearbeitungseinheit je nach Einsatzfall in eine Position verschwenken, in der das Werkzeug mit dem zu bearbeitenden Werkstück zur Bearbeitung in Kontakt tritt oder in der der Messtaster zum Vermessen des zu bearbeitenden Werkstücks mit diesem in Kontakt tritt. Die Anbringung von Bearbeitungswerkzeug und Messtaster an einander entgegengesetzten Seiten der Bearbeitungseinheit hat den Vorteil, dass sich diese nicht bei dem jeweiligen Einsatzfall gegenseitig stören und sich so mehr Einsatzmöglichkeiten für die erfindungsgemäße Maschine im Vergleich zum Stand der Technik eröffnen.

Eine Weiterbildung der Erfindung sieht ein Kühlflüssigkeitssystem vor, das in feste räumliche Zuordnung relativ zu dem Bearbeitungswerkzeug und der Maschinenbasis bringbar ist. Dieses Merkmal ist insbesondere relevant für den Einsatz der erfindungsgemäßen Vorrichtung mit einem Erosionswerkzeug, beispielsweise einer verhältnismäßig langsam drehenden Erodierscheibe. Um hinreichend gute Bearbeitungsergebnisse zu erhalten, ist es erforderlich, die Erodierscheibe im Bereich der Kontaktstelle zu dem Werkstück mit einer laminaren Strömung von Kühlflüssigkeit anzu-strömen. Dadurch kann gewährleistet werden, dass keinerlei Luftblasen an der Erodierstelle auftreten, die zu einem qualitativ minderwertigen Bearbeitungsergebnis führen können. Die Anmelderin hat erkannt, dass durch die feste räumliche Zuordnung des Kühlflüssigkeitssystems relativ zu dem Bearbeitungswerkzeug und der Maschinenbasis eine stets reproduzierbare laminare Anströmung des Bearbeitungswerk-zeugs mit Kühlflüssigkeit erreicht werden kann. Dies ist ein wesentlicher Vorteil gegenüber dem Stand der Technik wie er beispielsweise in EP 1 052 056 A2 gezeigt ist. Dort lassen sich zwar die einzelnen Kühlflüssigkeitsauslässe mit den Bearbeitungswerkzeugen mit verschwenken. Allerdings würde sich bei einer Niederdruckanströmung der Bearbeitungswerkzeuge, wie sie im Falle einer Erosionsbearbeitung mit einer verhältnismäßig langsam drehenden Erodierscheibe überlicherweise gewählt wird, schwerkraftbedingt der Strömungsverlauf des Kühlflüssigkeitsstroms verändern, so dass je nach Schwenkposition unterschiedliche Anströmungszustände im Bereich der Kontaktstelle erreicht werden würden. Das Auftreten von Luftblasen kann so nicht mehr zuverlässig verhindert werden. Bei diesem Stand der Technik kann dieses Problem dadurch vermieden werden, dass Kühlflüssigkeit unter Hochdruck an die Bearbeitungsstelle gefördert wird. Dies ist bei einer Schleifbearbeitung des Werkstücks durchaus möglich und wegen der hohen Drehzahl der Schleifscheibe auch üblich. Wir vorstehend bereits angemerkt, ist eine Hochdruckanströmung aber für den Fall der erosiven Bearbeitung ungeeignet.

Die Erfindung gewährleistet also durch die Tatsache, dass eine Verkippung nicht im Bereich der Bearbeitungseinheit sondern im Bereich der Werkstückpositioniereinrichtung erfolgt, dass im Bereich der Kontaktstelle zwischen Bearbeitungswerkzeug und Werkstück reproduzierbare Anströmverhältnisse mit Kühlflüssigkeit gewonnen werden können.

Die Erfindung betrifft ferner ein Verfahren nach Anspruch 10 zum Bearbeiten von mit Schneidzähnen versehenen plattenförmigen oder zylindrischen Werkstücken mit einer Vorrichtung, insbesondere nach der vorstehend beschriebenen Art, wobei die Vorrichtung eine

Maschinenbasis, eine relativ zu der Maschinenbasis verlagerbare Bearbeitungseinrichtung und eine relativ zu der Maschinenbasis verlagerbare Werkstückpositioniereinrichtung umfasst, wobei die Bearbeitungseinrichtung ein im Wesentlichen scheibenförmiges Bearbeitungswerkzeug umfasst, das mit einem radial äußeren Werkzeugbereich in bearbeitungswirksamen Kontakt zu einem in einem radial äußeren Werkstückbereich angeordneten Schneidzahn gebracht wird, wobei während der Bearbeitung des Schneidzahns das Werkstück mittels der Werkstückpositioniereinrichtung relativ zu dem Werkzeug derart verkippt wird, dass die Kontaktstelle im radial äußeren Werkzeugbereich im Wesentlichen an derselben Winkelposition des Bearbeitungswerkzeugs bezüglich der Bearbeitungseinrichtung verbleibt und dass die Kontaktstelle im radial äußeren Werkstückbereich im Wesentlichen an derselben Winkelposition des Werkstücks bezüglich der Werkstückpositioniereinrichtung verbleibt.

Die Erfindung wird im Folgenden anhand der beiliegenden Figuren erläutert. Es stellen dar:
- Fig. 1: eine perspektivische Übersichtsdarstellung der erfindungsgemäßen Vorrich- tung
- Figuren 2 bis 6: verschiedene Bearbeitungssituationen und Messsituationen im Zusammenhang mit der erfindungsgemäßen Vorrichtung und
- Fig. 7: eine leicht abgewandelte Ausführungsform der erfindungsgemäßen Vorrich- tung.

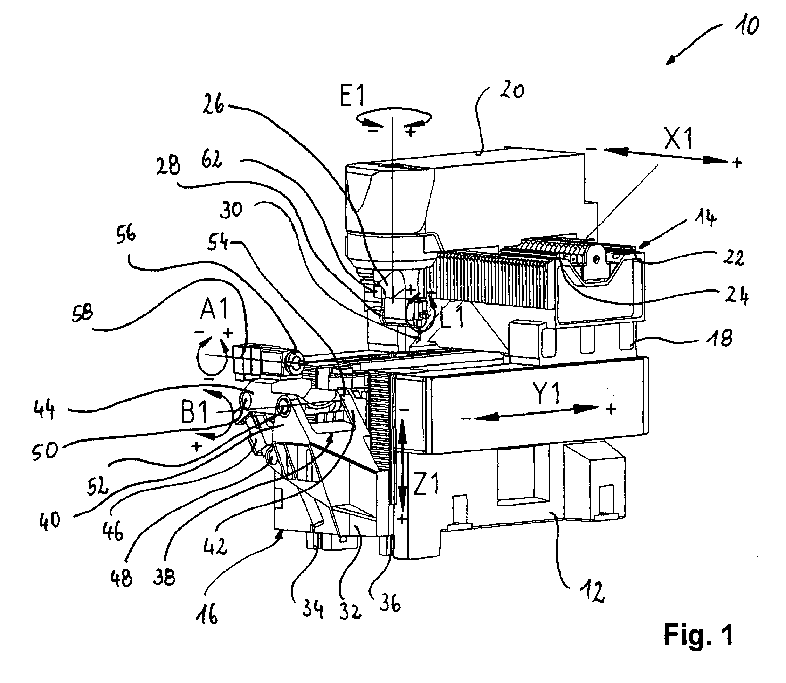

In Figur 1 ist eine Übersichtsdarstellung der erfindungsgemäßen Vorrichtung gezeigt und allgemein mit 10 bezeichnet. Diese umfasst eine blockartige Maschinenbasis 12, die fest auf einem Untergrund lagert. An der Maschinenbasis 12 sind eine Bearbeitungseinrichtung 14 sowie eine Werkstückpositioniereinrichtung 16 angebracht. Die Bearbeitungseinrichtung 14 umfasst eine Bearbeitungsbrücke 18, die durch eine gesteuerte Werkzeugachse entlang der Raumachse Y1 relativ zur Maschinenbasis 12 geführt verlagerbar ist. Hierzu sind an der Maschinenbasis 12 entsprechende Linearführungen sowie eine Antriebseinrichtung vorgesehen, die eine exakte Linearverlagerung des Bearbeitungsarms 20 entlang der Raumachse Y1 ermöglichen. Auf der Bearbeitungsbrücke 18 ist ein Bearbeitungsarm 20 angebracht. Der Bearbeitungsarm 20 ist auf der Bearbeitungsbrücke 18 entlang einer zur Achse Y1 orthogonalen Raumachse X1 gesteuert verlagerbar. Hierzu sind Linearführungen 22 und 24 vorgesehen, die eine exakte Linearverlagerung des Bearbeitungsarms 20 entlang der Raumachse X1 ermöglichen.

Der Bearbeitungsarm 20 ragt in freitragender Weise in Figur 1 nach links von der Bearbeitungsbrücke 18 vor. An seinem freien Ende ist an dem Bearbeitungsarm 20 eine als Schwenkkopf 26 ausgebildete Bearbeitungseinheit angebracht. Der Schwenkkopf 26 ist um eine Schwenkachse E1 verschwenkbar. Die Schwenkachse E1 ist im Wesentlichen orthogonal zu einer von den beiden Achsen X1 und Y1 aufgespannten virtuellen Ebene. Der Schwenkkopf 26 lässt sich über einen Bereich von bis zu 360° um die Schwenkachse E1 in beliebige Winkelpositionen verschwenken. An dem Schwenkkopf E1 sind eine Erodierscheibe 28 sowie ein Messtaster 30 angebracht. Die Erodierscheibe 28 ist über einen im Schwenkkopf 26 integrierten Drehantrieb um eine Antriebsachse L1 antreibbar. Die Erodierscheibe 28 ist bezüglich der Schwenkachse E1 an einer Seite des Schwenkkopfes 26 angebracht, wohingegen der Messtaster 30 bezüglich der Schwenkachse E1 auf der entgegengesetzten Seite des Schwenkkopfes 26 angebracht ist.

Wir Figur 1 ferner zeigt ist an der Maschinenbasis an einer vertikalen Seitenfläche die Werkstückpositioniereinrichtung angeordnet. Diese umfasst einen Lagerschlitten 32. Der Lagerschlitten 32 ist entlang einer dritten Raumachse Z1 durch entsprechende Ansteuerung linear verlagerbar. Hierzu sind an der Maschinenbasis 12 wiederum Linearführungen 34 und 36 angebracht, die über eine korrespondierende Antriebseinrichtung eine exakte Verlagerung des Lagerschlittens 32 entlang der vertikalen Raumachse Z1 ermöglichen.

Der Lagerschlitten 32 weist an seinem oberen Ende eine Lagergabel 38 mit einer ersten Lagerstrebe 40 und einer zweiten Lagerstrebe 42 auf. Zwischen den Lagerstreben 40 und 42 ist ein Freiraum vorgesehen, in dem eine Werkstückaufnahmeanordnung 44 angeordnet ist. Die Werkstückaufnahmeanordnung 44 ist um eine Kippachse B1 jeweils um etwa ± 30° verkippbar. Die Kippachse B1 verläuft im Wesentlichen orthogonal zu der dritten Raumachse Z1. Zur Realisierung einer automatisierten Kippbewegung ist ein ansteuerbares Linearstellglied 46 vorgesehen, das mit seinem einen Ende in einem Schwenklager 48 an dem Lagerschlitten 32 und mit seinem anderen Ende an einem Schwenklager 50 an der Werkstückaufnahmeanordnung 44 schwenkbar gelagert ist. Es ist noch zu ergänzen, dass die Lagerung der Werkstückaufnahmeanordnung 44 innerhalb der Lagergabel 38 über ein Loslager 52 und ein Festlager 54 realisiert ist.

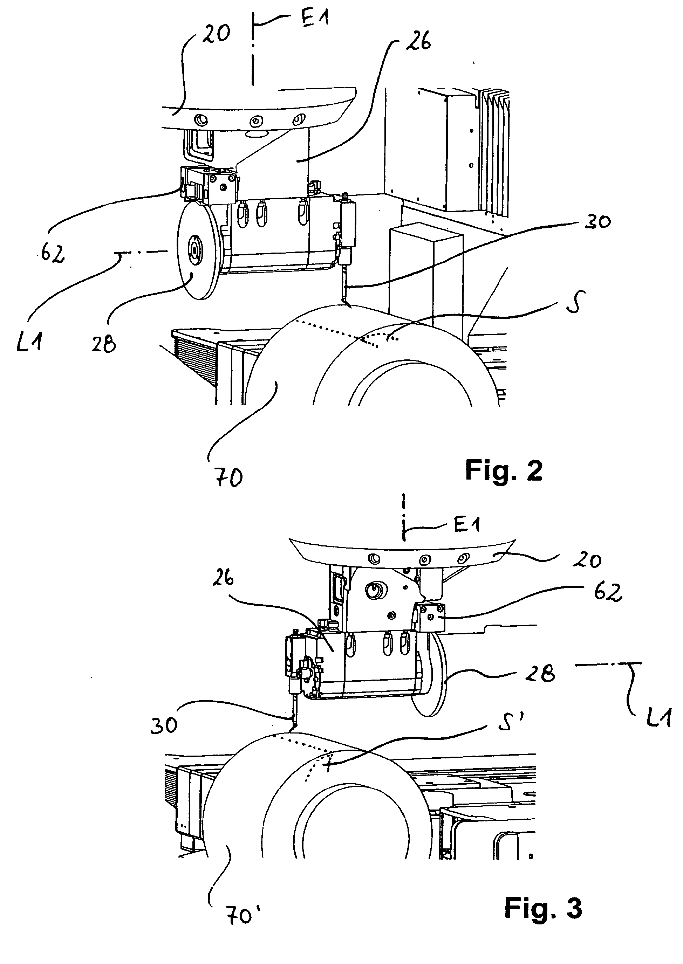

An der Werkstückaufnahmeanordnung 44 ist eine drehantreibbare Werkstückaufnahmespindel 56 vorgesehen. Ein hierzu angebrachter Drehantrieb 58 ermöglicht eine Drehung eines zu bearbeitenden scheibenförmigen Werkstücks, beispielsweise eines durch Erosionsbearbeitung zu schärfenden Kreissägeblattes 70 (siehe Fig. 2), um eine Werkstückdrehachse A1. Die Werkstückdrehachse A1 verläuft im Wesentlichen orthogonal zu der Kippachse B1.

Figur 1 zeigt ferner ein Kühlflüssigkeitssystem 62, das in fester räumlicher Zuordnung zu der Erodierscheibe 28 an dem Schwenkkopf 26 angeordnet ist. Dies bedeutet, dass die Erodierscheibe unabhängig von Schwerkrafteinflüssen in jeder Stellung des Schwenkkopfes über das Kühlflüssigkeitssystem 62 stets mit einem im Wesentlichen konstant fließenden Kühlflüssigkeitsstrahl angeströmt werden kann. Die Bewegungen des Schwenkkopfes durch Verlagerung entlang der Raumachsen Y1 und X1 sowie durch Verschwenken um die Schwenkachse E1 gewährleisten eine reproduzierbare und schwerkraftunabhängige Anströmung der Erodierscheibe 28 mit Kühlflüssigkeit, so dass im Bereich der Erodierscheibe eine laminare Kühlflüssigkeitsströmung erreicht werden kann.

Die erfindungsgemäße Vorrichtung ermöglicht die Durchführung verschiedenartiger Mess- und Bearbeitungsaufgaben, die im Folgenden anhand der Figuren 2 bis 6 unter ständiger Bezugnahme auf die Übersichtsdarstellung gemäß Figur 1 diskutiert werden sollen.

Figuren 2 und 3 zeigen jeweils einen Einsatzfall der erfindungsgemäßen Vorrichtung 10 zum Vermessen eines zylindrischen Werkstücks, beispielsweise eines Schaftfräsers 70 (siehe Fig.2) bzw. 70' (siehe Fig.3). Der Unterschied zwischen den Schaftfräsern 70 und 70' besteht darin, dass der Schaftfräser 70 rechtsschneidend ist, das heißt mit Schneidzähnen S gemäß Figur 2 ausgeführt ist. Hingegen ist der in Figur 3 schematisch dargestellte Schaftfräser 70' linksschneidend, das heißt mit Schneidzähnen S' ausgebildet, die in entgegengesetzter Richtung zu den Schneidzähnen S aus Figur 2 ausgerichtet sind.

In Figuren 2 und 3 ist erkennbar, dass durch die erfindungsgemäße Anordnung von Messtaster 30 und Bearbeitungswerkzeug 28 an entgegengesetzten Seiten des Schwenkkopfes 26 der Messtaster 30 in eine für das Vermessen des Werkstücks 70 bzw. 70' jeweils geeignete Position verschwenkt werden kann. Dadurch lassen sich ohne Weiteres Messaufgaben an dem Werkstück 70 bzw. 70' mit unterschiedlichsten Orientierungen des Messtaster 30 durchführen.

Figur 2 zeigt beispielsweise eine Messsituation, bei der das als rechtsschneidender Schaftfräser ausgebildete Werkstück 70 in seiner Zwölf-Uhr-Position, das heißt in seinem vertikal am höchsten gelegenen Bereich, mittels des Messtasters 30 vermessen wird. Demgegenüber wird in Figur 3 das als linksschneidender Schaftfräser ausgebildete Werkstück 70' mit dem Messtaster 30 vermessen, wobei der Schwenkkopf 26 um die Achse E1 über einen Winkel von 180° verschwenkt wurde.

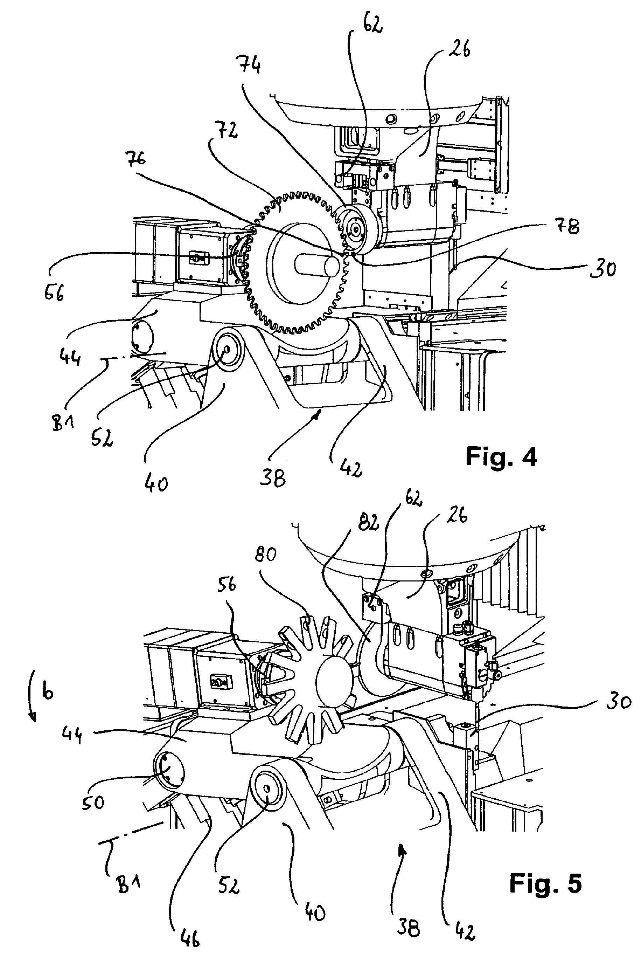

Fig. 4 zeigt eine Bearbeitungssituationen, bei der ein Kreissägeblatt 72 mit einer rotierenden topfförmigen Erodierscheibe 74 bearbeitet wird, die an dem Schwenkkopf 26 angebracht ist. Die Bearbeitung erfolgt in einem radial äußeren Winkelbereich 76 des Kreissägeblattes 72, der -- aufgrund seiner Lage korrespondierend zu einer entsprechenden Position auf einem Ziffernblatt einer Uhr -- als Drei-Uhr-Position bezeichnet wird. Die Erodierscheibe 74 kommt mit ihrer Stirnseite mit dem Kreissägeblatt 72 in einem radialen Winkelbereich 78 in Kontakt, der -- aufgrund seiner Lage korrespondierend zu einer entsprechenden Position auf einem Ziffernblatt einer Uhr -- als Sechs-Uhr-Position bezeichnet wird.

Aufgrund der erfindungsgemäßen Ausgestaltung der Vorrichtung 10 ist es möglich, den augenblicklich in dem Winkelbereich 76 befindlichen Schneidzahn des Kreissägeblattes 72 durch geeignetes Verlagern des Schwenkkopfes 26 entlang der Raumachsen X1 und Y1 und durch Verschwenken um die Schwenkachse E1 über seinen gesamten äußeren Stirn- und Seitenflächenbereich zu bearbeiten. Dabei kann das Kreissägeblatt 72 in der in Fig. 4 gezeigten Stellung verharren. Gleichermaßen tritt die Erodierscheibe 74 mit dem im Winkelbereich 76 liegenden, zu bearbeitenden Schneidzahn stets nur in dem Winkelbereich 78 der Erodierscheibe 74 in Kontakt, was zu qualitativ hochwertigen Bearbetungsergebnissen führt. Dies ist gewährleistet durch die erfindungsgemäße Verteilung der einzelnen Bearbeitungsachsen auf die Bearbeitungseinrichtung 14 einerseits und die Werkstückpositioniereinrichtung 16 andererseits. Ferner sorgt die erfindungsgemäße Anordnung des Messtasters 30 an dem von der Erodierscheibe 74 abgewandte Ende des Schwenkkopfes 26 dafür, dass der Messtaster 30 bei einer derartigen Bearbeitung nicht störend mit einer anderen Maschinenkomponente in Wechselwirkung tritt.

Es sei angemerkt, dass bei der Darstellung gemäß Figur 4 keine Verkippung um die Kippachse B1 erfolgt.

Fig. 5 zeigt eine von der Bearbeitungssituation gemäß Figur 4 abweichende Bearbeitungssituation. Bei der Bearbeitungssituation gemäß Figur 5 wird ein so genannter Abplattfräser 80 mit einer scheibenförmigen Erodierscheibe 82 bearbeitet. Die Besonderheit des Abplattfräsers 80 liegt in seiner geneigten Stirnfläche, die zur Bearbeitung in der in Fig. 5 gezeigten Stellung eine Verkippung der Werkstückaufnahmeanordnung 44 um die Kippachse B1 erfordert. Dies ist durch den Pfeil b in Fig. 5 angedeutet. Man erkennt auch, dass zwar der Abplattfräser 80 ebenso wie das Kreissägeblatt 72 in Fig. 4 in seiner Drei-Uhr-Position bearbeitet wird, dass die Erodierscheibe 82 den Abplattfräser 80 jedoch in ihrer Drei-Uhr-Position mit ihrer Umfangsfläche kontaktiert.

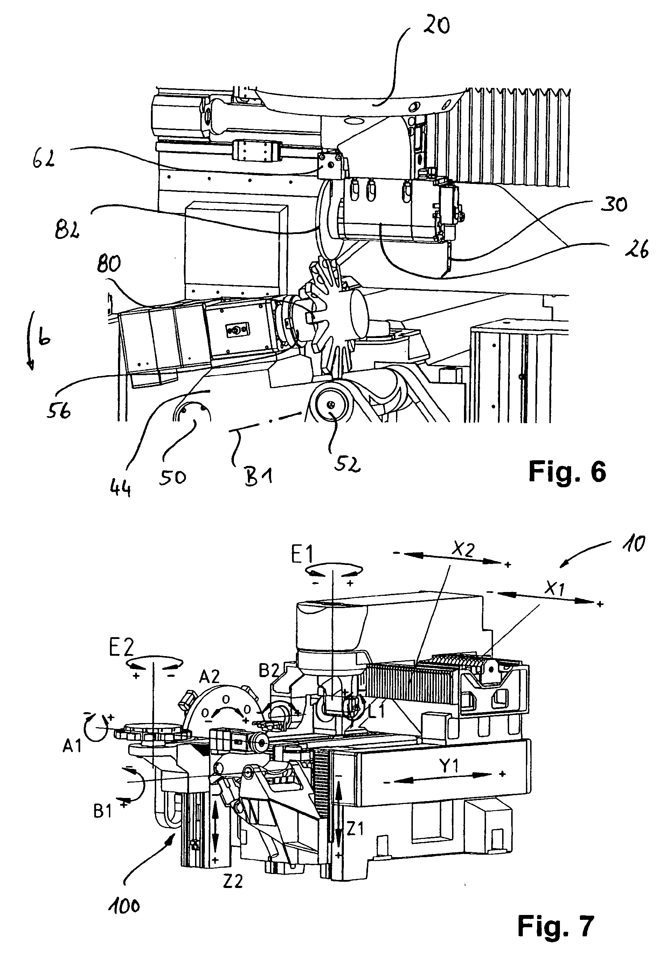

Figur 6 zeigt eine Bearbeitungssituation, bei der der Abplattfräser 80 gemäß Figur 5 in seiner Zwölf-Uhr-Position bearbeitet wird. Die Erodierscheibe 82 tritt im Bereich ihrer Sechs-Uhr-Position mit ihrer Stirnseite mit dem Abplattfräser 80 in Kontakt. Auch bei dieser Bearbeitungssituation ist der Abplattfräser 80 durch Verschwenken der Werkstückaufnahmeanordnung 44 um die Schwenkachse B1 entsprechend Pfeil b schräg gestellt.

Es versteht sich, dass die Darstellungen gemäß Figuren 2 bis 6 lediglich einen Überblick darüber geben, dass mit der erfindungsgemäßen Vorrichtung 10 eine Vielzahl von Bearbeitungsaufgaben und Messaufgaben an Werkstücken unterschiedlichster Geometrie und unterschiedlichsten Verwendungszweck ausgeführt werden können. Die erfindungsgemäße Anordnung der Bearbeitungs- und der Drehachsen bzw. Schwenkachsen sowie die erfindungsgemäße Anordnung von Erodierscheibe und Messtaster an dem Schwenkkopf 26 hat den Vorteil, dass das jeweils zu bearbeitende Werkstück in jedem Fall über einen Winkelbereich von seiner Drei-Uhr Position über seine Zwölf-Uhr-Position bis zu seiner Neun-Uhr Position auf beiden Stirnseiten und an seiner Umfangseite zugänglich ist, und dass eine Bearbeitung mit einer Erodierscheibe derart erfolgen kann, dass die Erodierscheibe stirnseitig sowie mit ihrer Umfangsfläche das zu bearbeitende Werkstück in einem Winkelbereich zwischen ihrer Drei-Uhr Position über ihre Sechs-Uhr-Position bis zu ihrer Neun-Uhr Position kontaktieren kann. Zusätzlich sei auf die Möglichkeit zur Verkippung des zu bearbeitenden Werkstücks um die Kippachse B1 verwiesen, was weitere Bearbeitungsmöglichkeiten eröffnet, wie in Figuren 5 und 6 gezeigt.

Ein weiterer wesentlicher Aspekt der Erfindung liegt darin, dass das Kühlflüssigkeitssystem 62 in fester räumlicher Zuordnung zu der jeweils verwendeten Erodierscheibe 74 bzw. 82 liegt. Dadurch kann gewährleistet werden, dass die Erodierscheibe 74 bzw. 82 stets mit einem hinsichtlich Anströmwinkel und Anströmstelle im Wesentlichen konstant bleibenden Kühlflüssigkeitsstrom angeströmt werden kann, so dass für ein qualitativ hochwertiges Erodierergebnis unbedingt zu vermeidende Luftblasen an der Erodierstelle zuverlässig unterbunden werden können. Erfindungsgemäß lässt sich an der Erodierstelle ohne größeren Aufwand stets ein reproduzierbarer laminarer Kühlflüssigkeitsstrom einstellen. In diesem Zusammenhang ist nämlich zu erwähnen, dass eine Verkippung des Schwenkkopfes, wie sie beispielsweise aus dem Stand der Technik bekannt ist, zu schwerkraftbedingten Veränderungen hinsichtlich Anströmwinkel und Anströmstelle führt und somit das Erreichen eines reproduzierbaren laminaren Kühlflüssigkeitsstroms zumindest erschwert.

Figur 7 zeigt nun die Anordnung gemäß Figur 1, wobei zusätzlich ein Werkstück- und Werkzeug-Beschickungssystem 100 vorgesehen ist. Dieses umfasst eine Reihe von weiteren Verlagerungsachsen und Schwenkachsen, die allesamt mit der Ziffer "2" versehen sind. Die Funktionsweise der erfindungsgemäßen Vorrichtung 10 gemäß vorstehender Beschreibung ändert sich jedoch nicht.

## Patentansprüche

1. Vorrichtung (10) zum Bearbeiten von mit Schneidzähnen (S) versehenen plattenförmigen oder zylindrischen Werkstücken (70), mit
- einer Maschinenbasis (12),
- einer relativ zu der Maschinenbasis (12) verlagerbaren Bearbeitungseinrichtung (14) und
- einer relativ zu der Maschinenbasis (12) verlagerbaren Werkstückpositioniereinrichtung (16),
wobei die Bearbeitungseinrichtung (14) eine relativ zur Maschinenbasis (12) entlang einer ersten Raumachse (Y1) linear verlagerbare Bearbeitungsbrücke (18) und einen relativ zur Bearbeitungsbrücke (18) entlang einer zweiten Raumachse (X1) linear verlagerbaren Bearbeitungsarm (20) umfasst, wobei an dem Bearbeitungsarm (20) eine Bearbeitungseinheit (26) mit einem Bearbeitungswerkzeug (28) um eine Schwenkachse (E1) schwenkbar gelagert ist, wobei
die Werkstückpositioniereinrichtung (16) einen relativ zu der Maschinenbasis (12) entlang einer dritten Raumachse (Z1) linear verlagerbaren Lagerschlitten (32) aufweist, wobei
an dem Lagerschlitten (32) eine Kipplageranordnung vorgesehen ist, in der eine Werkstückaufnahmeanordung (44) um eine Kippachse (B1) verkippbar gelagert ist, wobei die Kippachse (B1) im Wesentlichen orthogonal zu der dritten Raumachse (Z1) verläuft, **dadurch gekennzeichnet, dass** die Schwenkachse (E1) im Wesentlichen orthogonal zu einer von erster und zweiter Raumachse (Y1, X1) aufgespannten Ebene verläuft und
dass das Bearbeitungswerkzeug (28) an der Bearbeitungseinheit (26) um eine Antriebsachse (L1) drehantreibbar angebracht ist, wobei die Antriebsachse (L1) im Wesentlichen orthogonal zur Schwenkachse (E1) verläuft.

2. Vorrichtung (10) nach Anspruch 1,
**dadurch gekennzeichnet, dass** die Werkstückaufnahmeanordnung (44) eine um eine Werkstückdrehachse (A1) drehantreibbare Werkstückaufnahmespindel (56) aufweist.

3. Vorrichtung (10) nach Anspruch 2,
**dadurch gekennzeichnet, dass** die Werkstückdrehachse (A1) relativ zu der Kippachse (B1) im Wesentlichen orthogonal verläuft.

4. Vorrichtung (10) nach einem der vorangehenden Ansprüche,
**dadurch gekennzeichnet, dass** der Lagerschlitten (32) mit einer Lagergabel (38) ausgebildet ist und dass die Werkstückaufnahmeanordnung (44) in der Lagergabel (38) gelagert ist.

5. Vorrichtung (10) nach einem der vorangehenden Ansprüche,
**gekennzeichnet durch** ein Linearstellglied (46), insbesondere ein elektromechanisches Stellglied, das zum Verkippen der Werkstückaufnahmeeinrichtung (44) zwischen dieser und dem Lagerschlitten (32) angeordnet ist.

6. Vorrichtung (10) nach einem der vorangehenden Ansprüche,
**dadurch gekennzeichnet, dass** das Bearbeitungswerkzeug eine Erodierelektrode (28) ist.

7. Vorrichtung (10) nach einem der vorangehenden Ansprüche,
**dadurch gekennzeichnet, dass** das Bearbeitungswerkzeug eine Schleifscheibe ist.

8. Vorrichtung (10) nach einem der vorangehenden Ansprüche,
**dadurch gekennzeichnet, dass** das Bearbeitungswerkzeug (28) von einer Seite der Bearbeitungseinheit (26) vorsteht und dass an der bezüglich der Schwenkachse (E1) entgegengesetzten Seite der Bearbeitungseinheit (26) ein Messtaster (30) vorgesehen ist.

9. Vorrichtung (10) nach einem der vorangehenden Ansprüche,
**gekennzeichnet durch** ein Kühlflüssigkeitssystem (62), welches in feste räumliche Zuordnung relativ zu dem Bearbeitungswerkzeug (74, 82) und der Maschinenbasis (12) bringbar ist.

10. Verfahren zum Bearbeiten von mit Schneidzähnen (S) versehenen plattenförmigen oder zylindrischen Werkstücken (72, 80), mit einer Vorrichtung (10) nach einem der vorangehenden Ansprüche,
wobei die Bearbeitungseinrichtung (14) ein im Wesentlichen scheibenförmiges Bearbeitungswerkzeug (74, 82) umfasst, das mit einem radial äußeren Werkzeugbereich in bearbeitungswirksamen Kontakt zu einem in einem radial äußeren Werkstückbereich angeordneten Schneidzahn (S) gebracht wird,
wobei während der Bearbeitung des Schneidzahns (S) das Werkstück (72, 80) vermittels der Werkstückpositioniereinrichtung (16) relativ zu dem Werkzeug (74, 82) derart verkippt wird, dass die Kontaktstelle im radial äußeren Werkzeugbereich im Wesentlichen an derselben Winkelposition des Bearbeitungswerkzeugs (74, 82) bezüglich der Bearbeitungseinrichtung (14) verbleibt und dass die Kontaktstelle im radial äußeren Werkstückbereich im Wesentlichen an derselben Winkelposition des Werkstücks (72, 80) bezüglich der Werkstückpositioniereinrichtung (16) verbleibt.

## Claims

1. Device (10) for machining slab-shaped or cylindrical workpieces (70) which are provided with cutting teeth (S), with
- a machine base (12),
- a machining device (14) which can be displaced relative to the machine base (12), and
- a workpiece positioning device (16) which can be displaced relative to the machine base (12),
wherein the machining device (14) including a machining bridge (18) which can be displaced relative to the machine base (12) linearly along a first spatial axis (Y1) and a machining arm (20) which can be displaced relative to the machining bridge (18) linearly along a second spatial axis (X1), a machining unit (26) with a machining tool (28) being carried on the machining arm (20) so that it can swivel around a swivelling axis (E1),
wherein the workpiece positioning device (16) has a bearing slide (32) which can be displaced relative to the machine base (12) linearly along a third spatial axis (Z1), and
wherein a tilting bearing arrangement, in which a workpiece holding arrangement (44) is carried so that it can be tilted around a tilting axis (B1), is provided on the bearing slide (32), wherein the tilting axis (B1) runs substantially orthogonally to the third spatial axis (Z1),
**characterised in that** the swivelling axis (E1) substantially running orthogonally to a plane which is spanned by the first and second spatial axes (Y1, X1), and that the machining tool (28) is fitted on the machining unit (26) so that it can be driven around a driving axis (L1), wherein the driving axis (L1) runs substantially orthogonally to the swivelling axis (B1).

2. Device (10) according to Claim 1,
**characterized in that** the workpiece holding arrangement (44) has a workpiece holding spindle (56) which can be driven around a workpiece axis of rotation (A1).

3. Device (10) according to Claim 2,
**characterized in that** the workpiece axis of rotation (A1) runs substantially orthogonally relative to the tilting axis (B1).

4. Device (10) according to one of the preceding claims,
**characterized in that** the bearing slide (32) is formed with a bearing fork (38), and that the workpiece holding arrangement (44) is carried in the bearing fork (38).

5. Device (10) according to one of the preceding claims,
**characterized by** a linear actuator (46), particularly an electromechanical actuator, which to tilt the workpiece holding device (44) is arranged between it and the bearing slide (32).

6. Device (10) according to one of the preceding claims,
**characterized in that** the machining tool is an eroding electrode (28).

7. Device (10) according to one of the preceding claims,
**characterized in that** the machining tool is a grinding wheel.

8. Device (10) according to one of the preceding claims,
**characterized in that** the machining tool (28) projects from one side of the machining unit (26), and that on the opposite side of the machining unit (26) relative to the swivelling axis (E1), a probe (30) is provided.

9. Device (10) according to one of the preceding claims,
**characterized by** a coolant system (62), which can be put into a fixed spatial arrangement relative to the machining tool (72, 80) and machine base (12).

10. Method of machining slab-shaped or cylindrical workpieces (72, 80) which are provided with cutting teeth (S), with a device (10) according to one of the preceding claims,
wherein the machining device (14) including a machining tool (74, 82) which is substantially disc-shaped, and which is brought into machining-effective contact with a radially outer tool region to a cutting tooth (S) which is arranged in a radially outer workpiece region,
the workpiece (72, 80) being tilted relative to the tool (74, 82), during the machining of the cutting tooth (S), by means of the workpiece positioning device (16), in such a way that the contact point in the radially outer tool region remains substantially at the same angular position of the machining tool (74, 82) relative to the machining device (14), and that the contact point in the radially outer workpiece region remains substantially at the same angular position of the workpiece (72, 80) relative to the workpiece positioning device (16).

## Revendications

1. Dispositif (10) pour usiner des pièces plates ou cylindriques (70) présentant des dentures (S), comprenant
- une base de machine (12),
- un dispositif d'usinage (14) pouvant se déplacer par rapport à la base de machine (12) et
- un dispositif de positionnement de pièce (16) pouvant se déplacer par rapport à la base de machine (12),
ledit dispositif d'usinage (14) comportant un pont d'usinage (18) pouvant effectuer un mouvement linéaire par rapport à la base de machine (12), le long d'un premier axe spatial (Y1), et un bras d'usinage (20) pouvant effectuer un mouvement linéaire par rapport au pont d'usinage (18), le long d'un deuxième axe spatial (X1), une unité d'usinage (26) équipée d'un outil d'usinage (28) étant monté sur le bras d'usinage (20) et pouvant pivoter autour d'un axe de pivotement (E1), ledit dispositif de positionnement de pièce (16) présentant un chariot porte-paliers (32) pouvant effectuer un mouvement linéaire par rapport à la base de machine (12), le long d'un troisième axe spatial (Z1), un système de palier oscillant dans lequel un système de réception de pièce (44) est logé de manière à pouvoir osciller autour d'un axe d'oscillation (B1) étant prévu sur le chariot porte-paliers (32), ledit axe d'oscillation (B1) s'étendant pour l'essentiel perpendiculairement au troisième axe spatial (Z1),
**caractérisé en ce que** ledit axe de pivotement (E1) s'étend pour l'essentiel perpendiculairement à un plan tendu par le premier et le deuxième axe spatial (Y1, X1) et
**en ce que** l'outil d'usinage (28) dont est équipé l'unité d'usinage (26) est monté entraînable en rotation autour d'un axe d'entraînement (L1), ledit axe d'entraînement (L1) s'étendant pour l'essentiel perpendiculairement à l'axe de pivotement (E1).

2. Dispositif (10) selon la revendication 1,
**caractérisé en ce que** le système de réception de pièce (44) présente une broche de réception de pièce (56) entraînable en rotation autour d'un axe de rotation de pièce (A1).

3. Dispositif (10) selon la revendication 2,
**caractérisé en ce que** l'axe de rotation de pièce (A1) s'étend pour l'essentiel perpendiculairement à l'axe d'oscillation B1).

4. Dispositif (10) selon l'une des revendications précédentes,
**caractérisé en ce que** le chariot porte-paliers (32) est réalisé avec une fourchette de palier (38) et **en ce que** le système de réception de pièce (44) est logé dans la fourchette de palier (38).

5. Dispositif (10) selon l'une des revendications précédentes,
**caractérisé par** un organe de positionnement linéaire (46), en particulier par un organe de positionnement électromécanique disposé entre le chariot porte-paliers (32) et le système de réception de pièce (44) pour le basculement de ce dernier.

6. Dispositif (10) selon l'une des revendications précédentes,
**caractérisé en ce que** l'outil d'usinage consiste en une électrode d'érosion (28).

7. Dispositif (10) selon l'une des revendications précédentes,
**caractérisé en ce que** l'outil d'usinage consiste en un disque de meulage.

8. Dispositif (10) selon l'une des revendications précédentes,
**caractérisé en ce que** l'outil d'usinage (28) fait saillie sur un côté de l'unité d'usinage (26) et **en ce qu'**un détecteur de mesure (30) est prévu sur le côté de l'unité d'usinage (26) opposé par rapport à l'axe de pivotement (E1).

9. Dispositif (10) selon l'une des revendications précédentes,
**caractérisé par** un système de refroidissement par liquide (62) qui peut être amené en association spatiale fixe par rapport à l'outil d'usinage (74, 82) et la base de machine (12).

10. Procédé pour usiner des pièces plates ou cylindriques (72, 80) présentant des dentures (S), à l'aide d'un dispositif (10) selon l'une des revendications précédentes,
le dispositif d'usinage (14) comportant un outil d'usinage se présentant pour l'essentiel sous la forme d'un disque (74, 82) qui, par le biais d'une zone d'outil radialement extérieure est amené en contact d'usinage avec une denture (S) disposée dans une zone de pièce radialement extérieure, la pièce (72, 80) étant basculée de telle sorte par rapport à l'outil (74, 82) au moyen du dispositif de positionnement de pièce (16) pendant l'usinage de la denture (S) que le point de contact dans la zone d'outil radialement extérieure reste pour l'essentiel dans la même position angulaire que celle de l'outil d'usinage (74, 82), par rapport au dispositif d'usinage (14), et en ce que le point de contact dans la zone de pièce radialement extérieure reste pour l'essentiel dans la même position angulaire que celle de la pièce (72, 80), par rapport au dispositif de positionnement de pièce (16).
